# EUROPÄISCHE PATENTSCHRIFT

(11) **EP 4 166 255 B1**
(45) Veröffentlichungstag und Bekanntmachung des Hinweises auf die Patenterteilung: **09.07.2025**
(21) Anmeldenummer: 22199125.0
(22) Anmeldetag: 30.09.2022
(51) Int. Cl.: B21D 5/08, B21D 39/02, B21D 5/12

(54) **VERFAHREN ZUM FÜGEN VON KANTEN UND/ODER FLÄCHEN EINES PROFILS UND PROFILIERANLAGE**
METHOD FOR JOINING EDGES AND/OR SURFACES OF A PROFILE AND PROFILING SYSTEM
PROCÉDÉ D'ASSEMBLAGE DE BORDS ET/OU DE SURFACES D'UN PROFILÉ ET INSTALLATION DE PROFILAGE

(30) Priorität: 12.10.2021 EP 21202237
(43) Veröffentlichungstag der Anmeldung: 19.04.2023
(73) Patentinhaber: DREISTERN GmbH & Co.KG, 79650 Schopfheim (DE)
(72) Erfinder: Traub, Tilmann, 79395 Neuenburg (DE); Grüllich, Christoph, 79650 Schopfheim (DE)
(74) Vertreter: LBP Lemcke, Brommer & Partner Patentanwälte mbB

(56) Entgegenhaltungen:
- EP-A2- 0 127 127
- WO-A1-2020/077378
- FR-A1- 2 460 745
- GB-A- 1 559 858
- JP-A- H01 170 524
- JP-A- H11 254 031

## Beschreibung

Die Erfindung betrifft ein Verfahren zum Fügen von Kanten und/oder Flächen eines Profils in einer Profilieranlage zum Längsumformen eines quasi endlosen Materialbands oder Profils in eine zumindest teilweise geschlossene Profilform nach dem Oberbegriff des Anspruchs 1. Die Erfindung betrifft außerdem eine Profilieranlage nach dem Oberbegriff des Anspruchs 9.

Bei einem Verfahren der vorliegenden Art wird ein Materialband, eine Platine oder ein Profil in einer Profilieranlage mittels einer Mehrzahl von Rollumformwerkzeugen in eine in sich geschlossene oder teilweise geschlossene Profilform umgeformt und diese Profilform in einer Fügezone der Profilieranlage durch ein Fügeverfahren, wie insbesondere Schweißen, Löten, Kleben oder Falzen im Längsdurchlauf des Profils unter Ausbildung einer längs verlaufenden Fügenaht fixiert. Das Profil durchläuft hierbei in der Fügezone herkömmlicherweise eine Fügerollenanordnung, um das Profil einer Fügestelle kontrolliert zuzuführen und insbesondere an der Fügestelle zu stabilisieren und/oder zu gewährleisten, dass das Profil bei dem und nach dem Fügen maßhaltig ist. Hierbei soll sich eine stabile Fügenaht ausbilden.

Eine Profilieranlage der vorliegenden Art wird bei diesem Verfahren verwendet, und sie enthält eine Mehrzahl von Rollumformwerkzeugen zum sukzessiven Umformen des Materialbands oder Profils oder der Platine in eine in sich geschlossene oder teilweise geschlossene Profilform. Sie weist darüber hinaus in einer Fügezone eine Fügevorrichtung auf, um das in sich geschlossene oder teilweise geschlossene Profil an einer Fügestelle durch ein Fügeverfahren, wie insbesondere Schweißen, Löten, Kleben oder Falzen im Längsdurchlauf des Profils unter Ausbildung einer längs verlaufenden Verbindungsnaht zu fixieren. In der Fügezone befindet sich herkömmlicherweise eine Fügerollenanordnung, um das Profil der Fügestelle kontrolliert zuzuführen und insbesondere an der Fügestelle zu stabilisieren und/oder zu gewährleisten, dass das Profil bei dem und nach dem Fügen maßhaltig ist.

Eine Profilieranlage fertigt in der Regel aus einem Metallband quasi endlos Profile unterschiedlichster Querschnittsformen, wobei die Bezeichnung "Profil" hier auch Rohre mit einschließen soll. Je nach Profilform kommen hierfür eine Vielzahl von Rollumformwerkzeugen zum Einsatz, die in typischerweise 20 bis 30 in Linie hintereinander angeordneten Umformstationen gruppenweise zusammengefasst sind und das gewünschte Metallprofil mittels stufenweiser Kaltumformung sukzessive einformen. Das Ausgangsmaterial ist meist ein Metallband, es kann sich aber auch um Platinen oder bereits vorgeformte Ausgangsprofile handeln, die in der Profilieranlage zu einem gewünschten Profil umgeformt werden.

Wenn Rohre oder geschlossene Profile, oder auch nur teilweise geschlossene Profile in einer Profilieranlage gefertigt werden, müssen in einer Fügezone die Kanten und/oder Flächen des Profils, die beim Schließen der Profilform längs aneinander oder aufeinander zu liegen kommen, gefügt werden. Hierfür kommen Fügeverfahren aller Art zum Einsatz, insbesondere Schweißen, Löten und Kleben als stoffschlüssige Fügeverfahren, jedoch auch Falzen, Bördeln und dergleichen als formschlüssige Fügeverfahren. Hierbei wird im Längsdurchlauf des Profils eine längs verlaufende Fügenaht erzeugt, mittels welcher die Profilform fixiert wird.

In einer solchen Fügezone befindet sich herkömmlicherweise eine Fügerollenanordnung, wie sie beispielsweise in der FR-A-2 460 745 oder der JP-A-H 01 170524 vorgeschlagen worden ist. Damit wird das Profil einer Fügestelle kontrolliert zugeführt und insbesondere an der Fügestelle stabilisiert.

Fügerollenanordnungen für ein Verfahren und eine Profilieranlage der vorliegenden Art werden in der Regel geometrisch überwacht, wobei die Position der einzelnen Fügerollen manuell oder motorisch eingestellt wird. Die Beurteilung der Richtigkeit der Rollenposition und insbesondere die Feinabstimmung derselben obliegt den Bedienpersonen der Profilieranlage, und die Qualität der Ergebnisse sowie ein im Betrieb etwa notwendig werdendes Nachjustieren der Rollenpositionen korreliert in der Regel mit der Erfahrung der zuständigen Bedienpersonen.

Es liegt auf der Hand, dass die Reproduzierbarkeit von Ergebnissen und die Sicherung der Qualität von Ergebnissen, die von der Erfahrung der Bedienpersonen abhängen, oft optimierungsbedürftig sind. Hinzu kommt, dass Bedienpersonen, die beim Einrichten und Nachjustieren der Fügerollenanordnungen viel Erfahrung mitbringen, meist nicht vor Ort verfügbar sind, wenn sich die Prozessparameter durch Veränderungen in Quantität und Qualität der Profilmaterialien sowie durch Veränderungen in der Prozessumgebung ändern.

Wenn die Anordnung bzw. die Positionen der Fügerollen nicht stimmen, können schlechte Arbeitsergebnisse entstehen, beispielsweise durch ein Wiederaufbrechen der Fügenaht nach der Fügezone oder durch Deformationen des zu fügenden Profils bis hin zu einem Zerdrücken der Profilgeometrie.

Der Erfindung liegt daher die Aufgabe zugrunde, ein Verfahren zum Fügen von Kanten und/oder Flächen eines Profils in einer Profilieranlage sowie eine Profilieranlage der eingangs genannten Art und eine Fügeanordnung vorzuschlagen, mit dem bzw. mit der eine qualitativ hochwertige Fügenaht möglichst weitgehend unabhängig von Erfahrung und Können der Bedienpersonen hergestellt werden kann.

Gelöst ist diese Aufgabe durch ein Verfahren mit den Merkmalen des Anspruchs 1 sowie durch eine Profilieranlage mit den Merkmalen des Anspruchs 9.

Bevorzugte Weiterbildungen des erfindungsgemäßen Verfahrens finden sich in den Ansprüchen 2 bis 8. Vorteilhafte Ausgestaltungen der erfindungsgemäßen Profilieranlage sind in den Ansprüchen 10 und 11 niedergelegt.

Das erfindungsgemäße Verfahren, bei dem das Materialband, die Platine oder das Profil in der Profilieranlage mittels einer Mehrzahl von Rollumformwerkzeugen in eine in sich geschlossene oder teilweise geschlossene Profilform umgeformt und diese Profilform in einer Fügezone der Profilieranlage durch ein Fügeverfahren im Längsdurchlauf des Profils unter Ausbildung einer längs verlaufenden Fügenaht fixiert wird, wird also so durchgeführt, dass das Profil in der Fügezone eine flächige Fügeanordnung durchläuft, um das Profil einer Fügestelle kontrolliert zuzuführen und insbesondere an der Fügestelle zu stabilisieren und/oder zu gewährleisten, dass das Profil bei dem und nach dem Fügen maßhaltig ist, wobei in der Fügezone Kräfte bzw. Beträge von Kraftkomponenten erfasst werden, die von zumindest einem Teilabschnitt der flächigen Fügeanordnung auf das Profil einwirken.

Die erfindungsgemäße Profilieranlage, die eine Mehrzahl von Rollumformwerkzeugen zum sukzessiven Umformen des Materialbands oder Profils oder der Platine in eine in sich geschlossene oder teilweise geschlossene Profilform aufweist, sowie mit einer Fügevorrichtung in einer Fügezone versehen ist, um das in sich geschlossene oder teilweise geschlossene Profil an einer Fügestelle durch ein Fügeverfahren im Längsdurchlauf des Profils unter Ausbildung einer längs verlaufenden Verbindungsnaht zu fixieren, ist so ausgestaltet, dass eine flächige Fügeanordnung vorhanden ist, um das Profil der Fügestelle kontrolliert zuzuführen und insbesondere an der Fügestelle zu stabilisieren und/oder zu gewährleisten, dass das Profil bei dem und nach dem Fügen maßhaltig ist, wobei die flächige Fügeanordnung mit mindestens einem Messwertaufnehmer zusammenwirkt, um Kräfte oder Beträge von Kraftkomponenten zu erfassen, die von mindestens einem Teil der flächigen Fügeanordnung auf das Profil einwirken.

Unter einer flächigen Fügeanordnung im Sinne der vorliegenden Erfindung ist allgemein eine Anordnung zu verstehen, die nicht nur - wie Fügerollen - einen Linienkontakt mit dem durchlaufenden Profil herstellen, sondern das Profil mit einem größeren, flächigen Kontaktbereich berühren, der sich mit dem Profil mitbewegt.

Eine flächige Fügeanordnung im Sinne der vorliegenden Erfindung besteht somit aus einer Anzahl von Fügerollen, die mit einem flexiblen Band, einem Gliederband oder einer Gliederkette umschlungen sind, insbesondere wie bei einem Förderband. Es kann sich beispielsweise um eine kettenartige Struktur handeln, mit der eine Anzahl von Fügerollen im Sinne einer Kette eines Raupenfahrzeugs umschlungen sind.

Die vorliegende Erfindung beruht auf der Erkenntnis, dass für die Qualität und den Erfolg der Fügeoperation nicht in erster Linie die Positionierung der flächigen Fügeanordnung verantwortlich ist, sondern vielmehr der auf das Profil ausgeübte Druck, der aus der geometrischen Zustellung bzw. Position der Fügerollen entsteht. Je nach Fügeverfahren ist es, wie erfindungsgemäß erkannt wurde, auch entscheidend, wie der Haltedruck in einer Stabilisierungszone hinter der eigentlichen Fügestelle, der auf das frisch gefügte Profil einwirkt, verteilt ist. Wenn der Druck lokal oder insgesamt nicht ausreicht, werden die Fügepartner nicht ausreichend verpresst, und die Fügenaht kann wieder aufbrechen. Ist der Druck auf das Profil zu hoch, droht eine Deformation des Profils und ein Zerdrücken der eigentlichen Profilgeometrie sowie ein schlechtes Fügeergebnis. Besonders bei stoffschlüssigen Fügeverfahren, wie Schweißen und Kleben, ist es für die Qualität und Haltbarkeit der Fügenaht entscheidend, dass die geometrische Anordnung bzw. die Position der Fügeanordnung auch in einer Stabilisierungszone hinter der Fügestelle stimmen, in der die Fügenaht kontrolliert abgekühlt bzw. ausgehärtet wird und erst dadurch die notwendige Qualität und Haltbarkeit erhält.

Die vorliegende Erfindung beruht auf dem Prinzip, die auf die flächige Fügeanordnung beim Fügen und gegebenenfalls auch nach dem Fügen wirkenden Prozesskräfte zu überwachen und zu kontrollieren. Die Prozesskräfte sollen dabei mit den in der Fügezone auf das Profil wirkenden Anpressdrücken korrelieren. Durch die Abkehr des Hauptaugenmerks von der Position der Fügeanordnung und das Richten des Hauptaugenmerks auf die von der Fügeanordnung auf das Profil einwirkenden Kräfte, die solcherart gemessen werden, dass sie mit auf das Profil einwirkenden Anpressdrücken korrelieren, wird es möglich, den Fügeprozess zu automatisieren und insbesondere von der Erfahrung der Bedienpersonen unabhängig zu machen, indem auch unerfahrenen Bedienpersonen die Parameter an die Hand gegeben werden, mit denen sie die Positionierung der der flächigen Fügeanordnung optimieren können.

Nach einer bevorzugten Weiterbildung des erfindungsgemäßen Verfahrens werden die von zumindest einem Teil der flächigen Fügeanordnung in mindestens einer Raumrichtung auf das Profil wirkenden Anpressdrücke ermittelt, indem die auf das Profil einwirkenden Kräfte an der Fügestelle und/oder innerhalb der Fügezone erfindungsgemäß erfasst werden. Somit liefert das Verfahren direkt diejenige Größe, auf die es, wie erfindungsgemäß erkannt worden ist, für die Qualität des Fügeprozesses letztlich ankommt.

Die in der Fügezone auf das Profil wirkenden Anpressdrücke können anhand der erfindungsgemäß erfassten Kräfte oder Kraftkomponenten durch Verstellen mindestens eines Teils der flächigen Fügeanordnung zumindest zum Teil geregelt werden, wodurch nicht nur eine Automatisierung des Einstellens der Fügeanordnung möglich ist, sondern auch selbsttätig erkannt und gegebenenfalls eine Anpassung durchgeführt werden kann, wenn sich etwa die Qualität des Materials des Profils oder dessen Geometrie bzw. Quantität, insbesondere die Materialdicke oder Materialbreite ändert.

Bevorzugt werden hierbei an der Fügestelle und/oder hinter der Fügestelle die Anpressdrücke geregelt, die von der flächigen Fügeanordnung auf das Profil einwirken, um die Qualität des Arbeitsergebnisses sicherzustellen.

Für die im Rahmen dieser bevorzugten Weiterbildung des erfindungsgemäßen Verfahrens durchgeführte Regelung der Anpressdrücke können auch weitere Prozessparameter, insbesondere die tatsächlichen Positionen der zu fügenden Bereiche des Profils, oder auch die Positionen der Fügerollen oder etwa vorhandenen zusätzlichen Halterollen oder Haltestrukturen berücksichtigt werden. Dies setzt Sensoren zur Erfassung der Positionen voraus, kann diesen Aufwand jedoch rechtfertigen, da die Arbeitsergebnisse je nach Profilform hierdurch optimiert werden können.

Es ist im Rahmen der vorliegenden Erfindung ferner erkannt worden, dass es besonders bei stoffschlüssigen Fügeverfahren, wie Schweißen und Kleben, für die Qualität und Haltbarkeit der Fügenaht außerdem entscheidend ist, dass die geometrische Anordnung bzw. die Position der Fügerollen auch in einer Stabilisierungszone hinter der Fügestelle stimmen, in der die Fügenaht kontrolliert abgekühlt bzw. ausgehärtet wird und erst dadurch die notwendige Qualität und Haltbarkeit erhält.

Eine weitere bevorzugte Ausgestaltung des erfindungsgemäßen Verfahrens besteht daher darin, dass das Profil nach der Fügestelle innerhalb der Fügezone eine Stabilisierungszone durchläuft, um die Verbindungsnaht durch Abkühlen und/oder Aushärten zu stabilisieren. Dies ist insbesondere bei stoffschlüssigen Fügeverfahren, wie Schweißen und Kleben, unverzichtbar. Hierbei dient ein Teil der flächigen Fügeanordnung zur Stabilisierung des Profils in der Stabilisierungszone, und es werden erfindungsgemäß Kräfte erfasst, die von mindestens einem Teil der flächigen Fügeanordnung in der Stabilisierungszone auf das Profil einwirken.

Mit dieser Weiterbildung des erfindungsgemäßen Verfahrens wird die Erkenntnis umgesetzt, dass nicht nur der Anpressdruck für das Arbeitsergebnis entscheidend ist, der an der eigentlichen Fügestelle auf das Profil einwirkt, sondern auch die Anpressdrücke in einer nachgelagerten Stabilisierungszone, in der die Verbindungsnaht abkühlt und/oder aushärtet und erst hierdurch ihre Festigkeit erhält.

Beim Einrichten der flächigen Fügeanordnung können nach einer weiteren bevorzugten Ausgestaltung des erfindungsgemäßen Verfahrens Vorgaben für in der Fügezone auf das Profil wirkende Anpressdrücke und/oder Kräfte als Zielwerte verwendet werden. Hierdurch können auch wenig erfahrene Bedienpersonen unterstützt und in die Lage versetzt werden, die flächige Fügeanordnung so einzurichten, dass ein gutes Fügeergebnis erzielt wird.

Um Veränderungen in den Prozessbedingungen zu erkennen und bei erkannten Veränderungen zumindest einen Warnhinweis auszugeben, können im Rahmen des erfindungsgemäßen Verfahrens in der flächigen Fügeanordnung fortlaufend Kräfte erfasst werden, die von mindestens von einem Teil der flächigen Fügeanordnung auf das Profil einwirken. Mit einem solchen Warnhinweis wird vermieden, dass Ausschuss produziert wird, auch wenn keine erfahrene Bedienperson vor Ort ist, die rasch und angemessen auf eine Veränderung der Prozessbedingungen reagiert, oder wenn eine Veränderung der Prozessbedingungen nicht ohne weiteres erkennbar ist.

Als weitere vorteilhafte Ausgestaltung des erfindungsgemäßen Verfahrens können schließlich Zielwerte für in der Fügezone auf das Profil einwirkende Kräfte fortlaufend und mit Hilfe von Algorithmen des maschinellen Lernens optimiert werden. Besonders Vorteilhaft ist es, wenn diese Algorithmen Zugriff auf weitere Informationen enthalten, die im Prozess stromauf- oder stromabwärts erfasst werden. Stromaufwärts könnte dies beispielsweise die Erfassung der Breite des zugeführten Blechbands sein. Stromabwärts können beispielsweise Systeme zur Qualitätssicherung eingesetzt werden. Beispiele für derartige Systeme sind Wirbelstrommessgeräte zur Beurteilung von Schweißnähten, optische Messgeräte zur Vermessung von Fügestellen (um z.B. einen Nahteinfall oder eine Nahtüberhöhung zu erfassen) oder geometrische Messsysteme zur Erfassung des Profilquerschnitts. Die Algorithmen des maschinellen Lernens können die so erfassten Qualitätsmerkmale mit den in der Fügezone erfassten Prozessgrößen korrelieren, diese nachregeln sowie die zugrundeliegenden Regelgesetze fortlaufend anpassen und optimieren.

Die erfindungsgemäße flächige Fügeanordnung zur Durchführung des hier beschriebenen und beanspruchten Verfahrens wird bevorzugt dadurch weitergebildet, dass zumindest ein Teil der flächigen Fügeanordnung motorisch verstellbar ist, wobei eine Steuerung mit der flächigen Fügeanordnung und dem Messwertaufnehmer in Wirkverbindung steht, um die in der Fügezone auf das Profil wirkenden Anpressdrücke anhand der erfassten Kräfte durch Verstellen mindestens eines Teils der flächigen Fügeanordnung zumindest zum Teil zu regeln.

Die erfindungsgemäße Profilieranlage kann im Rahmen der vorliegenden Erfindung dadurch weitergebildet sein, dass zumindest ein Teil der flächigen Fügeanordnung motorisch verstellbar ist, wobei eine Steuerung mit der flächigen Fügeanordnung und dem Messwertaufnehmer in Wirkverbindung steht, um die in der Fügezone auf das Profil wirkenden Anpressdrücke anhand der erfassten Kräfte durch Verstellen mindestens eines Teils der flächigen Fügeanordnung zumindest zum Teil zu regeln. Hierdurch ergeben sich die bereits zum erfindungsgemäßen Verfahren beschriebenen Vorteile und Effekte.

Wenn die erfindungsgemäße Profilieranlage in der Fügezone mit einer flächigen Fügeanordnung ausgestattet ist, kann es schließlich vorteilhaft sein, wenn der Anpressdruck der flächigen Fügeanordnung mittels Pneumatikzylindern erzeugt wird, die auf eine kettenartige Struktur einwirken. Denn im Zusammenwirken mit einer flächigen Fügeanordnung, die im Rahmen der vorliegenden Erfindung beispielsweise als kettenartige Struktur ausgebildet sein kann, die insbesondere etwa wie die Ketten eines Kettenfahrzeugs ausgestaltet sind, können die federelastischen Eigenschaften von Pneumatikzylindern Vorteile bieten.

Ausführungsbeispiele für eine Profilieranlage und für eine erfindungsgemäße flächige Fügeanordnung, anhand deren auch ein beispielhaft ausgestaltetes Verfahren gemäß der vorliegenden Erfindung beschrieben wird, wird im Folgenden anhand der beigefügten Zeichnungen erläutert. Es zeigen:
- Figur 1: eine schematische Darstellung einer Profilieranlage, die erfindungsgemäß ausgestaltet ist oder werden kann;
- Figur 2: eine schematische Darstellung einer Fügerollenanordnung, während des Prozesses;
- Figur 3: eine schematische Darstellung einer Fügerollenanordnung mit entsprechenden Haltestrukturen in der Profilieranlage;
- Figur 4: eine schematische Darstellung eines Prozessbeispiels für stoffschlüssiges Fügen in einer Fügerollenanordnung;
- Figur 5: eine schematische Darstellung eines Prozessbeispiels für formschlüssiges Fügen in einer Fügerollenanordnung;
- Figur 6: eine schematische Darstellung wie Figur 2, allerdings einer kombinierten Fügerollenanordnung und flächigen Fügeanordnung;
- Figur 7: eine Draufsicht auf die Fügerollenanordnung gemäß Figur 3, allerdings modifiziert durch Vorsehen einer flächigen Fügeanordnung in Form einer kettenartigen Struktur.

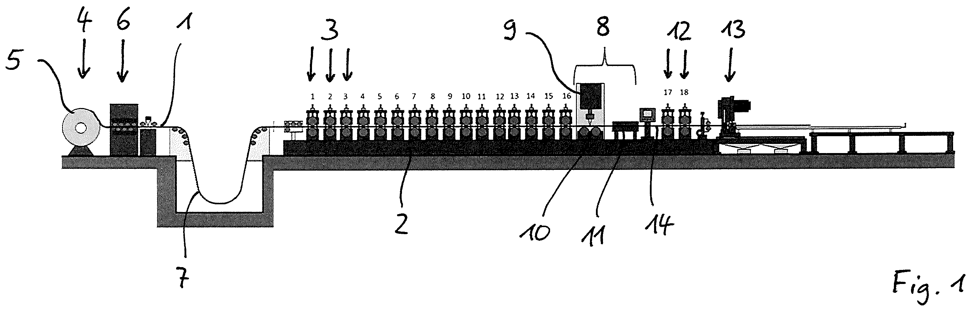

Figur 1 zeigt eine Profilieranlage in schematischer seitlicher Ansicht. In dieser wird ein quasi endloses Materialband 1 aus Metall mittels einer Mehrzahl von Rollumformwerkzeugen 2, die vorliegend zu 16 Umformstationen 3 gruppiert sind, sukzessive zu einem Profil umgeformt. Hierzu wird das Materialband 1 auf einer Haspel 4 von einem Coil 5 abgehaspelt, durch eine Richtmaschine 6 und eine Schlaufe 7 geführt, bevor es in den Umformstationen 3 kontinuierlich und sukzessive längs in die gewünschte Profilform eingeformt wird. An die 16 Umformstationen 3 anschließend, durchläuft das Materialband 1 bzw. das dann bereits in eine geschlossene Profilform eingeformte Profil eine Fügezone 8. In dieser Fügezone 8 befindet sich eine Schweißvorrichtung 9, die das Profil durch Schweißen an einer Fügestelle 10 schließt. In der Fügezone 8, um die und stromabwärts der Fügestelle 10, befindet sich - hier nur schematisch dargestellt - zumindest ein Teil einer Fügerollenanordnung 11, um zu gewährleisten, dass die Schweißnaht unter kontrollierten Bedingungen gefügt wird und am geschlossenen Profil 14 kontrolliert aushärten kann. Das Materialband 1 bzw. das fertige geschlossene Profil 14 durchläuft sodann zwei weitere Umformstationen, die als Kalibrierstationen 12 fungieren, bevor es dann in einer Ablängstation mit einer mitlaufenden Trennmaschine 13 in einzelne Hohlprofile mit gewünschter Länge abgelängt wird.

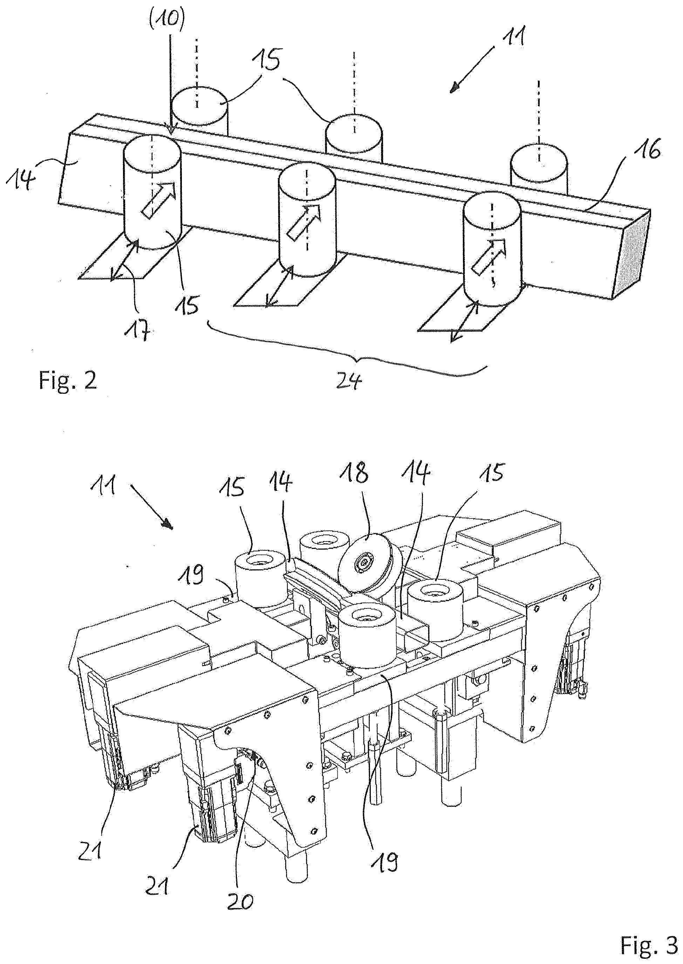

Figur 2 zeigt in schematischer Darstellung die Fügerollenanordnung 11 aus Figur 1, die in und stromabwärts der Schweißvorrichtung 9 angeordnet ist. An dieser Stelle sei angemerkt, dass es auch im Rahmen der vorliegenden Erfindung liegt, wenn die Fügerollenanordnung 11 je nach Fügeverfahren direkt an der Fügestelle 10 positioniert ist, oder nicht nur stromabwärts der Fügestelle 10, sondern auch sich über die Fügestelle 10 hinweg erstreckend angeordnet sein kann.

Das bereits zu einem Profil 14 mit geschlossener Profilform umgeformte Materialband 1 wird in der in Figur 2 dargestellten Fügerollenanordnung 11 zwischen drei Paaren von Fügerollen 15 hindurchgeführt. Auf der Oberseite des Profils 14 ist eine Fügenaht 16 zu erkennen, die von der Schweißvorrichtung 9 erzeugt worden ist. Diese Fügenaht 16 muss erst abkühlen und erstarren, bevor sie stabil ist. In der Zeit, die dieser Vorgang benötigt, wird das Profil zwischen den Fügerollen 15 so geführt, dass die Fügenaht 16 sich weder öffnen kann, noch zu stark mit Druck belastet wird. Hierzu sind die Fügerollen 15, wie durch Doppelpfeile 17 angedeutet, zum Profil 14 hin und von diesem weg verstellbar. Erfindungsgemäß werden die Fügerollen 15, vorzugsweise an einer (nicht dargestellten) Verstellmechanik mittels Kraftsensoren überwacht, um die Kräfte zu erfassen, die von den Fügerollen 15 auf das Profil einwirken - zumindest diejenigen Kraftkomponenten, die zu einer Belastung oder Entlastung der Fügenaht 16 wesentlich beitragen.

Mit dem eingeklammerten Bezugszeichen 10 ist eine mögliche Fügestelle 10 hier angedeutet, da diese auch zwischen dem ersten Paar von Fügerollen 15 lokalisiert sein kann, d.h. dass der Laserstrahl der Schweißvorrichtung 9 an dieser Fügestelle 10 auf das Profil 14 einwirkt und insofern die Fügerollenanordnung 11, anders als in Figur 1 dargestellt, sich über die gesamte Fügezone 8 hinweg erstreckt, also auch an der Fügestelle 10 vorhanden ist.

Figur 3 zeigt in einer weniger schematischen Darstellung mit einigen Details eine alternative Ausführung der Fügerollenanordnung 11. Das Profil 14 wird hier wiederum zwischen zwei Paaren von vertikal orientierten zylindrischen Fügerollen 15 stabilisiert, wobei zwei weitere Fügerollen 18 an den beiden oberen Kanten des mit in etwa rechteckigem Querschnitt versehenen Profils 14 angreifen, um die Fügenaht 16 noch besser unter kontrollierten Bedingungen aushärten zu können.

Die Details in Figur 3 sollen die Verstellmechanik für die verstellbaren Fügerollen 15, 18 verdeutlichen: Die Position jeder einzelnen Fügerolle 15, 18 kann über Halteplatten 19, Spindeln 20 und motorisch oder händisch zu betätigende Verstellräder verändert werden. Die weiteren Fügerollen 18 können hierbei, wie Figur 3 andeutet, sowohl vertikal als auch horizontal verstellt werden.

Die für die Erfassung von Kräften oder Beträgen von Kraftkomponenten in der Fügezone notwendigen Kraftsensoren bzw. Messwertaufnehmer können an den verschiedensten Stellen der Verstellmechanik angebracht werden, beispielsweise an den Halteplatten 19, den Verstellrädern 21, den Achsen der Fügerollen 15, den Spindeln 20, in Querführungen und dergleichen mehr. Auch die Auswertung der Stromsignale von optional vorhandenen Verstellmotoren kann zur Evaluation der Kräfte bzw. Kraftkomponenten dienen.

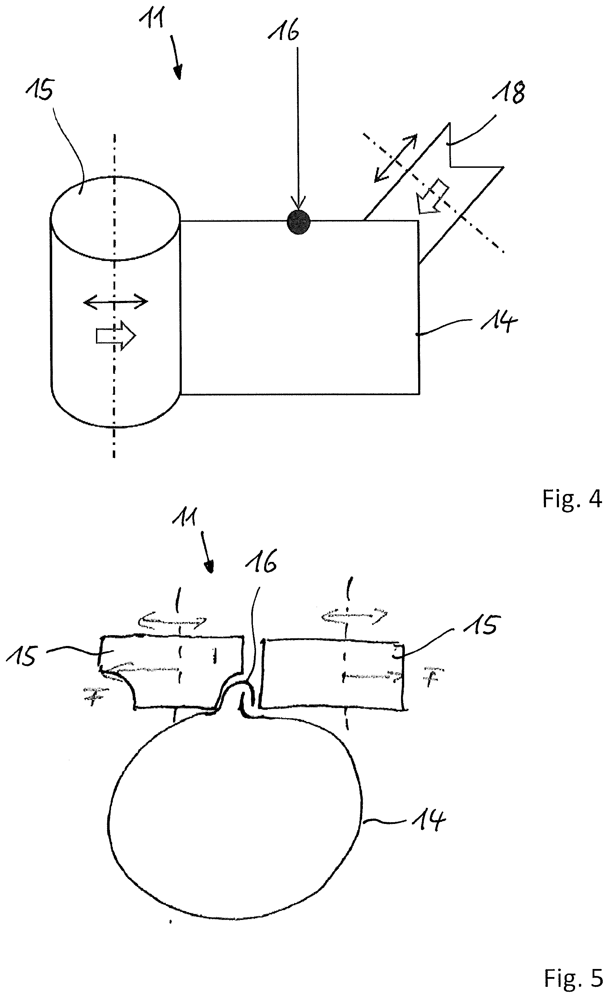

Figur 4 zeigt in einer sehr schematischen Darstellung nochmals den grundsätzlichen Aufbau der Fügerollenanordnung 11 aus Figur 3. Das Profil 14 mit der Fügenaht 16 wird zwischen den verstellbaren Fügerollen 15 und den ebenfalls verstellbaren weiteren Fügerollen 18, die auf die oberen Kanten des Profils 14 einwirken, in definiertem Zustand gehalten, und die Positionen der Fügerollen 15, 18 sind - mittels Überwachung von Kräften und Kraftkomponenten - so gewählt und werden gegebenenfalls solcherart nachgestellt oder geregelt, dass die Fügenaht 16, die hier eine Schweißnaht ist, unter kontrollierten und reproduzierbaren Bedingungen aushärten kann.

Figur 5 zeigt eine schematische Darstellung wie Figur 4, jedoch eines anderen Ausführungsbeispiels: Das Profil 14 ist hier ein Rohr mit im Wesentlichen kreisrundem Querschnitt, und die Fügenaht 16 wird hier nicht durch Schweißen, sondern durch Falzen und gegebenenfalls nachfolgendem Löten hergestellt. Das Falzen erfolgt mittels zweier speziell ausgestalteten Fügerollen 15, d.h. vorliegend ist die Fügestelle 10 im Querschnitt dargestellt. Die beiden Fügerollen 15 können zueinander hin und voneinander weg verstellt werden, um durch mehr oder weniger starke Umformung des Profils 14 an dieser Stelle die Fügenaht 16 zu bilden.

Es werden wiederum die Kräfte erfasst, die von den Fügerollen 15 auf das Profil 14 an der Fügenaht 16 ausgeübt werden, so dass die Fügerollen 15 immer solcherart positioniert werden können, dass die Fügenaht 16 nicht zu schwach, aber auch nicht zu stark mit Umformkräften belastet wird. Die Erfassung der entsprechenden Kräfte bzw. Kraftkomponenten kann beispielsweise ganz einfach durch Messwertaufnehmer an den Wellen bzw. Achsen (nicht dargestellt) der Fügerollen 15 erfolgen.

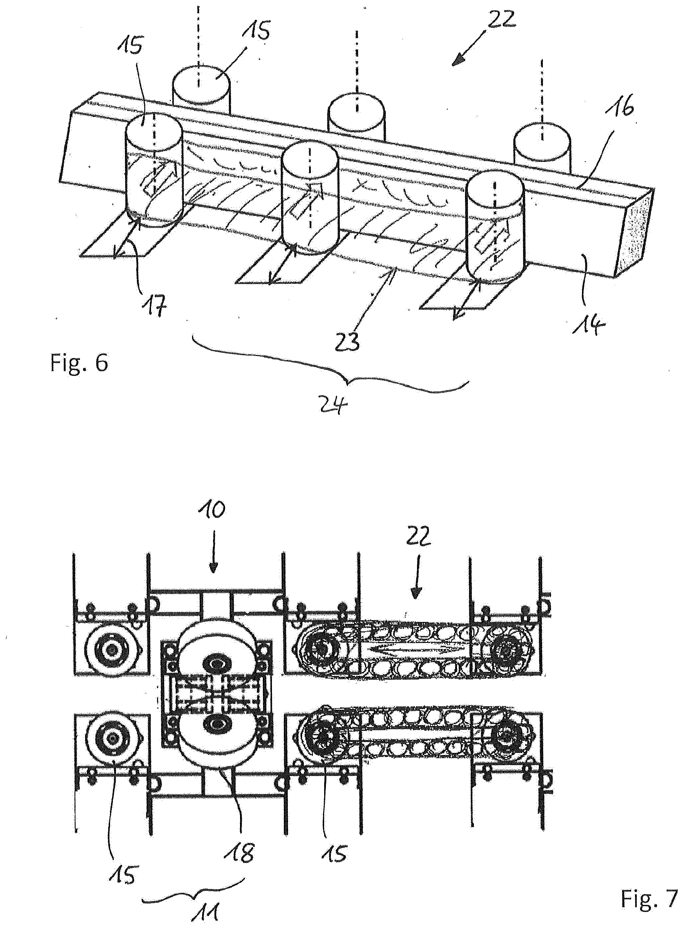

Figur 6 zeigt ein weiteres Ausführungsbeispiel für ein kontrolliertes Aushärten der Fügenaht 16 im Profil 14, und zwar anhand einer Darstellung, die weitgehend mit Figur 2 übereinstimmt. Dementsprechend sind gleiche Elemente mit identischen Bezugszeichen versehen.

Das Profil 14 mit der durch Schweißen frisch erzeugten Fügenaht 16 durchläuft drei Paare von Fügerollen 16, die jeweils in ihren Relativpositionen zum Profil 14 verstellbar sind, und das Profil 14 wird zwischen diesen Paaren von Fügerollen 15 mit überwachten Kräften, die auf das Profil 14 und insbesondere auf die Fügenaht 16 einwirken, gehalten bzw. transportiert. Um die Fügerollen 15 je einer Seite des Profils 14 herum ist hier jeweils eine förderbandähnliche, kettenartige Struktur 23 geschlungen, so dass aus der Fügerollenanordnung 11 im Ergebnis eine flächige Fügeanordnung 22 entstanden ist. Denn die ketteartige Struktur 23 verteilt die von den Fügerollen 15 auf das Profil 14 einwirkenden Kräfte, die im Ausführungsbeispiel nach Figur 2 über einen linearen Kontakt übertragen werden, auf eine Fläche, was ein Profil 14 mit empfindlichem Material, beispielsweise Aluminium, oder mit einer empfindlichen Oberfläche schonender behandelt. Auch die auf die Fügenaht 16 letztlich wirkenden Kräfte können in der flächigen Fügeanordnung 22 mittels der kettenartigen Struktur 23 gleichmäßiger verteilt werden. Die Oberfläche der kettenartigen Struktur 23 bewegt sich außerdem mit dem Profil 14 mit, was die Oberfläche des Profils 14 schont.

Die Fügerollen 15 der in Figur 6 dargestellten flächigen Fügeanordnung 22 können anstatt mit der kettenartigen Struktur 23 auch mit einem flexiblen Band, einem Gliederband oder einer Gliederkette umschlungen sein.

Figur 7 zeigt schließlich in einer schematischen Draufsicht eine Fügerollenanordnung 11 gemäß Figur 3, wobei jedoch zusätzlich, stromabwärts der weiteren Fügerollen 18, eine flächige Fügeanordnung 22 hinzu kombiniert worden ist. Diese flächige Fügeanordnung 22 ist wiederum aus Fügerollen 15 gebildet, die mit einer kettenartigen Struktur 23 im Sinne der Kette eines Raupenfahrzeugs umschlungen sind, vorliegend um empfindliche Oberflächen des (hier nicht dargestellten) Profils 14 zu schonen und den Haltedruck auf das Profil 14 möglichst flächig zu verteilen, wenn die Fügenaht 16 aushärtet.

Die in Figur 7 links dargestellten beiden Fügerollen 15 sind dafür zuständig, das Profil 14 der Fügestelle 10 zuzuführen, welche sich zwischen den weiteren Fügerollen 18 befindet. Das Aushärten der Fügenaht 16 erfolgt dann in einer Stabilisierungszone 24, in der das Profil 14 von der flächigen Fügeanordnung 22 gehalten und geführt wird und - per Überwachung der von der flächigen Fügeanordnung 22 ausgeübten Kräfte - unter kontrollierten Bedingungen aushärten kann.

### Bezugszeichenliste:

- 1: Materialband
- 2: Rollumformwerkzeuge
- 3: Umformstationen
- 4: Haspel
- 5: Coil
- 6: Richtmaschine
- 7: Schlaufe
- 8: Fügezone
- 9: Schweißvorrichtung
- 10: Fügestelle
- 11: Fügerollenanordnung
- 12: Kalibrierstationen
- 13: Trennmaschine
- 14: Profil
- 15: Fügerollen
- 16: Fügenaht
- 17: Doppelpfeile
- 18: Fügerollen (weitere)
- 19: Halteplatten
- 20: Spindeln
- 21: Verstellräder
- 22: flächige Fügeanordnung
- 23: kettenartige Struktur
- 24: Stabilisierungszone

## Patentansprüche

1. Verfahren zum Fügen von Kanten und/oder Flächen eines Profils (14) in einer Profilieranlage zum Längsumformen eines quasi endlosen Materialbands (1) oder Profils oder einer Platine in eine zumindest teilweise geschlossene Profilform,
wobei das Materialband (1) oder Profil oder die Platine in der Profilieranlage mittels einer Mehrzahl von Rollumformwerkzeugen (2) in ein in sich geschlossenes oder teilweise geschlossenes Profil (14) umgeformt und dieses Profil (14) in einer Fügezone (8) der Profilieranlage durch ein Fügeverfahren, wie insbesondere Schweißen, Löten, Kleben oder Falzen im Längsdurchlauf des Profils (14) unter Ausbildung einer längs verlaufenden Fügenaht (16) fixiert wird,
**dadurch gekennzeichnet,**
**dass** das Profil (14) in der Fügezone (8) eine flächige Fügeanordnung (22) durchläuft, um das Profil (14) einer Fügestelle (10) kontrolliert zuzuführen und insbesondere an und/oder stromabwärts der Fügestelle (10) zu stabilisieren und/oder zu gewährleisten, dass das Profil (14) bei dem und nach dem Fügen maßhaltig ist,
wobei in der Fügezone (8) Kräfte oder Beträge von Kraftkomponenten erfasst werden, die von zumindest einem Teilabschnitt der flächigen Fügeanordnung (22) auf das Profil (14) einwirken,
und wobei die flächige Fügeanordnung (22) aus einer Anzahl von Fügerollen (15) besteht, welche von einem flexiblen Band, einem Gliederband, einer Gliederkette oder einer kettenartigen Struktur (23) umschlungen sind, insbesondere wie bei einem Förderband, um das Profil (14) mit einem flächigen Kontaktbereich zu berühren, der sich mit dem Profil (14) mitbewegt und den Haltedruck auf das Profil (14) möglichst flächig verteilt.

2. Verfahren nach Anspruch 1,
wobei, durch Erfassen von auf das Profil einwirkenden Kräften an der Fügestelle (10) und/oder innerhalb der Fügezone (8), die von zumindest einem Teil der flächigen Fügeanordnung (22) in mindestens einer Raumrichtung auf das Profil (14) wirkenden Anpressdrücke ermittelt werden.

3. Verfahren nach einem der Ansprüche 1 oder 2,
wobei die in der Fügezone (8) auf das Profil (14) wirkenden Anpressdrücke anhand der erfassten Kräfte oder Kraftkomponenten durch Verstellen mindestens eines Teils der flächigen Fügeanordnung (22) zumindest zum Teil geregelt werden, und wobei vorzugsweise die an der Fügestelle (10) und/oder hinter der Fügestelle (10) von der flächigen Fügeanordnung (22) auf das Profil einwirkenden Anpressdrücke geregelt werden, wobei für die Regelung der Anpressdrücke vorzugsweise weitere Prozessparameter, insbesondere die tatsächlichen Positionen der zu fügenden Bereiche des Profils (14) und die Position der flächigen Fügeanordnung (22), berücksichtigt werden.

4. Verfahren nach mindestens einem der Ansprüche 1 bis 3,
wobei das Profil (14) nach der Fügestelle (10) eine Stabilisierungszone (24) innerhalb der Fügezone durchläuft, um die Verbindungsnaht durch Abkühlen und/oder Aushärten zu stabilisieren,
wobei zumindest ein Teil der flächigen Fügeanordnung (22) zur Stabilisierung des Profils (14) in der Stabilisierungszone (24) dient,
und wobei Kräfte erfasst werden, die von mindestens einem Teil der flächigen Fügeanordnung (22) in der Stabilisierungszone (24) auf das Profil (14) einwirken.

5. Verfahren nach mindestens einem der Ansprüche 1 bis 4,
wobei Vorgaben für in der Fügezone (8) auf das Profil (14) wirkende Anpressdrücke und/oder Kräfte als Zielwerte für die Einrichtung der flächigen Fügeanordnung (24) verwendet werden.

6. Verfahren nach mindestens einem der Ansprüche 1 bis 5,
wobei in der flächigen Fügeanordnung (24) fortlaufend Kräfte erfasst werden, die mindestens von einem Teil der flächigen Fügeanordnung (22) auf das Profil (14) einwirken, um Veränderungen in den Prozessbedingungen zu erkennen und bei erkannten Veränderungen einen Warnhinweis auszugeben.

7. Verfahren nach mindestens einem der Ansprüche 1 bis 6,
wobei nach der Fügezone (8) die Qualität der Fügenaht und/oder des Bauteils erfasst und/oder kontrolliert wird.

8. Verfahren nach mindestens einem der Ansprüche 1 bis 7,
wobei Zielwerte für in der Fügezone (8) auf das Profil (14) einwirkende Kräfte fortlaufend und mit Hilfe von Algorithmen des maschinellen Lernens optimiert werden.

9. Profilieranlage zum Längsumformen eines quasi endlosen Materialbands (1) oder Profils oder einer Platine in eine zumindest teilweise geschlossene Profilform,
mit einer Mehrzahl von Rollumformwerkzeugen (2) zum sukzessiven Umformen des Materialbands (1) oder Profils in ein in sich geschlossenes oder teilweise geschlossenes Profil (14),
mit einer Fügevorrichtung in einer Fügezone (8), um das in sich geschlossene oder teilweise geschlossene Profil (14) an einer Fügestelle (10) durch ein Fügeverfahren, wie insbesondere Schweißen, Löten, Kleben oder Falzen im Längsdurchlauf des Profils (14) unter Ausbildung einer längs verlaufenden Fügenaht (16) zu fixieren,
**gekennzeichnet durch**
eine flächige Fügeanordnung (22), um das Profil (14) der Fügestelle (10) kontrolliert zuzuführen und insbesondere an und/oder stromabwärts der Fügestelle (10) zu stabilisieren und/oder zu gewährleisten, dass das Profil (14) bei dem und nach dem Fügen maßhaltig ist,
wobei die flächige Fügeanordnung (22) mit mindestens einem Messwertaufnehmer zusammenwirkt, um Kräfte oder Beträge von Kraftkomponenten zu erfassen, die von mindestens einem Teil der flächigen Fügeanordnung (22) auf das Profil (14) einwirken,
und wobei die flächige Fügeanordnung (22) aus einer Anzahl von Fügerollen (15) besteht, welche von einem flexiblen Band, einem Gliederband, einer Gliederkette oder einer kettenartigen Struktur (23) umschlungen sind, insbesondere wie bei einem Förderband, um das Profil (14) mit einem flächigen Kontaktbereich zu berühren, der sich mit dem Profil (14) mitbewegt und den Haltedruck auf das Profil (14) möglichst flächig verteilt.

10. Profilieranlage nach Anspruch 9,
wobei zumindest ein Teil der flächigen Fügeanordnung (22) motorisch verstellbar ist, und wobei eine Steuerung mit der flächigen Fügeanordnung (22) und dem Messwertaufnehmer in Wirkverbindung steht, um die in der Fügezone (8) auf das Profil (14) wirkenden Anpressdrücke anhand der erfassten Kräfte durch Verstellen mindestens eines Teils der flächigen Fügeanordnung (22) zumindest zum Teil zu regeln.

11. Profilieranlage nach einem der Ansprüche 9 oder 10,
wobei das Profil (14) nach der Fügestelle (10) eine Stabilisierungszone (24) innerhalb der Fügezone durchläuft, um die Verbindungsnaht durch Abkühlen und/oder Aushärten zu stabilisieren,
wobei zumindest ein Teil der flächigen Fügeanordnung (22) zur Stabilisierung des Profils (14) in der Stabilisierungszone (24) dient,
und wobei außerdem Kräfte erfasst werden, die von mindestens einem Teil der flächigen Fügeanordnung (22) in der Stabilisierungszone (24) auf das Profil (14) einwirken.

## Claims

1. Method for joining edges and/or surfaces of a profile (14) in a profiling installation for longitudinally forming a virtually endless material strip (1) or profile or a plate into an at least partially closed profile shape,
wherein the material strip (1) or profile or the plate is formed in the profiling installation by means of a plurality of roll forming tools (2) into a profile (14) which is closed per se or is partially closed, and said profile (14) is secured in a joining zone (8) of the profiling installation by a joining method, such as, in particular, welding, brazing, adhesive bonding or folding, during a longitudinal pass of the profile (14), with a longitudinally running joining seam (16) being formed,
**characterized in that**
the profile (14) passes in the joining zone (8) through a planar joining arrangement (22) in order to feed the profile (14) in a controlled manner to a joining point (10) and to stabilize said profile in particular at and/or downstream of the joining point (10), and/or to ensure that the profile (14) is dimensionally stable during and after joining,
wherein forces or magnitudes of force components which act on the profile (14) from at least one subsection of the planar joining arrangement (22) are detected in the joining zone (8),
and wherein the planar joining arrangement (22) consists of a number of joining rollers (15), around which a flexible belt, a link belt, a link chain or a chain-like structure (23) is looped, in particular as in the case of a conveyor belt, in order to make contact with the profile (14) by way of a planar contact region which moves together with the profile (14) and distributes the holding pressure in as planar a manner as possible to the profile (14).

2. Method according to claim 1,
wherein, by detecting forces acting on the profile at the joining point (10) and/or within the joining zone (8), the contact pressures acting on the profile (14) in at least one spatial direction from at least a part of the planar joining arrangement (22) are determined.

3. Method according to any one of claims 1 to 2,
wherein the contact pressures acting on the profile (14) in the joining zone (8) are at least partially regulated on the basis of the detected forces or force components by adjusting at least a part of the planar joining arrangement (22), and wherein preferably the contact pressures acting on the profile at the joining point (10) and/or behind the joining point (10) from the planar joining arrangement (22) are regulated, wherein, for the regulation of the contact pressures, further process parameters, in particular the actual positions of the regions of the profile (14) that are to be joined and the position of the planar joining arrangement (22), are taken into consideration.

4. Method according to at least one of claims 1 to 3,
wherein the profile (14), after the joining point (10), passes through a stabilization zone (24) within the joining zone in order to stabilize the connecting seam by cooling and/or curing,
wherein at least a part of the planar joining arrangement (22) serves for stabilizing the profile (14) in the stabilization zone (24),
and wherein forces which act on the profile (14) from at least a part of the planar joining arrangement (22) in the stabilization zone (24) are detected.

5. Method according to at least one of claims 1 to 4,
wherein specifications for contact pressures and/or forces acting on the profile (14) in the joining zone (8) are used as target values for setting up the planar joining arrangement (24).

6. Method according to at least one of claims 1 to 5,
wherein forces are detected continuously in the planar joining arrangement (24), said forces acting on the profile (14) from at least a part of the planar joining arrangement (22), in order to identify changes in the process conditions and to output a warning indication when changes are identified.

7. Method according to at least one of claims 1 to 6,
wherein, after the joining zone (8), the quality of the joining seam and/or of the component is detected and/or checked.

8. Method according to at least one of claims 1 to 7,
wherein target values for forces acting on the profile (14) in the joining zone (8) are optimized continuously and using machine learning algorithms.

9. Profiling installation for longitudinally forming a virtually endless material strip (1) or profile or a plate into an at least partially closed profile shape,
with a plurality of roll forming tools (2) for successively forming the material strip (1) or profile into a profile (14) which is closed per se or partially closed,
with a joining device in a joining zone (8) in order to secure the profile (14), which is closed per se or is partially closed at a joining point (10), by a joining method, such as in particular welding, brazing, adhesive bonding or folding during a longitudinal pass of the profile (14), with a longitudinally running joining seam (16) being formed,
**characterized by**
a planar joining arrangement (22) in order to feed the profile (14) in a controlled manner to the joining point (10) and to stabilize said profile in particular at and/or downstream of the joining point (10), and/or to ensure that the profile (14) is dimensionally stable during and after joining,
wherein the planar joining arrangement (22) interacts with at least one measurement transducer in order to detect forces or magnitudes of force components which act on the profile (14) from at least a part of the planar joining arrangement (22),
and wherein the planar joining arrangement (22) consists of a number of joining rollers (15), around which a flexible belt, a link belt, a link chain or a chain-like structure (23) is looped, in particular as in the case of a conveyor belt, in order to make contact with the profile (14) by way of a planar contact region which moves together with the profile (14) and distributes the holding pressure in as planar a manner as possible to the profile (14).

10. Profiling installation according to claim 9,
wherein at least a part of the planar joining arrangement (22) is adjustable by motor, and wherein a controller is operatively connected to the planar joining arrangement (22) and to the measurement transducer in order to at least partially regulate the contact pressures acting on the profile (14) in the joining zone (8) on the basis of the detected forces by adjusting at least a part of the planar joining arrangement (22).

11. Profiling installation according to any one of claims 9 or 10,
wherein the profile (14), after the joining point (10), passes through a stabilization zone (24) within the joining zone in order to stabilize the connecting seam by cooling and/or curing,
wherein at least a part of the planar joining arrangement (22) serves for stabilizing the profile (14) in the stabilization zone (24),
and wherein, in addition, forces which act on the profile (14) from at least a part of the planar joining arrangement (22) in the stabilization zone (24) are detected.

## Revendications

1. Procédé d'assemblage de bords et/ou de surfaces d'un profilé (14) dans une installation de profilage pour la formation longitudinale d'une bande de matériau (1) quasi sans fin ou d'un profilé ou d'une platine dans une forme profilée fermée au moins partiellement,
dans lequel la bande de matériau (1) ou le profilé ou la platine est formé(e) dans l'installation de profilage au moyen d'une pluralité d'outils de formation de rouleaux (2) dans un profilé (14) fermé en soi ou partiellement fermé, et ce profilé (14) est fixé dans une zone d'assemblage (8) de l'installation de profilage par un procédé d'assemblage, tel que le soudage, le brasage, le collage ou le pliage durant le passage longitudinal du profilé (14) en formant un cordon d'assemblage (16) s'étendant longitudinalement,
**caractérisé en ce que**
le profilé (14) passe dans la zone d'assemblage (8) par un ensemble d'assemblage plat afin d'amener de manière contrôlée le profilé (14) à un point d'assemblage (10) et de le stabiliser en particulier au niveau et/ou en aval du point d'assemblage (10) et/ou de garantir que le profilé (14) soit stable en dimensions lors de l'assemblage et après celui-ci,
dans lequel des forces ou sommes de composantes de force sont détectées dans la zone d'assemblage (8), lesquelles sont exercées sur le profilé (14) par au moins une section partielle de l'ensemble d'assemblage (22) plat,
et dans lequel l'ensemble d'assemblage (22) plat se compose d'un nombre de rouleaux d'assemblage (15) qui sont enroulés par une bande flexible, une bande à maillons, une chaîne à maillons ou une structure à chaîne (23), en particulier comme pour une bande de transport afin de toucher le profilé (14) avec une zone de contact plate qui se déplace avec le profilé (14) et répartit la pression de retenue sur le profilé (14) de la manière la plus plate possible.

2. Procédé selon la revendication 1,
dans lequel des pressions de serrage exercées par au moins une partie de l'ensemble d'assemblage (22) plat dans au moins un sens spatial sur le profilé (14) sont déterminées en détectant des forces exercées sur le profilé au niveau du point d'assemblage (10) et/ou à l'intérieur de la zone d'assemblage (8).

3. Procédé selon l'une quelconque des revendications 1 ou 2,
dans lequel les pressions de serrage exercées sur le profilé (14) dans la zone d'assemblage (8) sont régulées au moins en partie à l'aide des forces ou composantes de force détectées en déplaçant au moins une partie de l'ensemble d'assemblage (22) plat, et dans lequel les pressions de serrage exercées sur le profilé par l'ensemble d'assemblage (22) plat au niveau du point d'assemblage (10) et/ou derrière le point d'assemblage (10) sont de préférence régulées, dans lequel d'autres paramètres de processus, en particulier les positions réelles des zones du profilé (14) à assembler et la position de l'ensemble d'assemblage (22) plat sont prises en compte pour la régulation des pressions de serrage.

4. Procédé selon au moins l'une quelconque des revendications 1 à 3,
dans lequel le profilé (14) passe après le point d'assemblage (10) par une zone de stabilisation (24) à l'intérieur de la zone d'assemblage afin de stabiliser le cordon de liaison par refroidissement et/ou durcissement,
dans lequel au moins une partie de l'ensemble d'assemblage (22) plat sert à la stabilisation du profilé (14) dans la zone de stabilisation (24),
et dans lequel des forces sont détectées, lesquelles sont exercées sur le profilé (14) par au moins une partie de l'ensemble d'assemblage (22) plat dans la zone de stabilisation (24).

5. Procédé selon au moins l'une quelconque des revendications 1 à 4,
dans lequel des spécifications sont utilisées pour des pressions de serrage et/ou des forces exercées sur le profilé (14) dans la zone d'assemblage (8) comme valeurs cibles pour l'appareil de l'ensemble d'assemblage (24) plat.

6. Procédé selon au moins l'une quelconque des revendications 1 à 5,
dans lequel des forces sont détectées en continu dans l'ensemble d'assemblage (24) plan, forces qui sont exercées sur le profilé (14) par au moins une partie de l'ensemble d'assemblage plat (22) afin de détecter des changements dans les conditions de processus et d'émettre un avertissement lorsque des changements sont détectés.

7. Procédé selon au moins l'une quelconque des revendications 1 à 6,
dans lequel la qualité du cordon d'assemblage et/ou du composant est détectée et/ou contrôlée après la zone d'assemblage (8).

8. Procédé selon au moins l'une quelconque des revendications 1 à 7,
dans lequel des valeurs cibles sont optimisées pour des forces exercées en continu sur le profilé (14) dans la zone d'assemblage (8) et à l'aide d'algorithmes de l'apprentissage machine.

9. Installation de profilage pour la formation longitudinale d'une bande de matériau (1) quasi sans fin ou d'un profilé ou d'une platine dans une forme profilée fermée au moins partiellement,
avec une pluralité d'outils de formation de rouleaux (2) pour la formation successive de la bande de matériau (1) ou d'un profilé dans un profilé (14) fermé en soi ou partiellement fermé,
avec un dispositif d'assemblage dans une zone d'assemblage (8) afin de fixer le profilé (14) fermé en soi ou partiellement fermé au niveau d'un point d'assemblage (10) par un procédé d'assemblage tel qu'en particulier le soudage, le brasage, le collage ou le pliage durant le passage longitudinal du profilé (14) en formant un cordon d'assemblage (16) s'étendant longitudinalement,
**caractérisé par**
un ensemble d'assemblage (22) plat afin d'amener de manière contrôlée le profilé (14) au point d'assemblage (10) et de le stabiliser en particulier au niveau et/ou en aval du point d'assemblage (10) et/ou de garantir que le profilé (14) soit stable en dimensions lors de l'assemblage et après celui-ci,
dans laquelle l'ensemble d'assemblage (22) plat coagit avec au moins un transducteur afin de détecter des forces ou sommes de composantes de force qui sont exercées sur le profilé (14) par au moins une partie de l'ensemble d'assemblage (22) plat,
et dans laquelle l'ensemble d'assemblage (22) plat se compose d'un nombre de rouleaux d'assemblage (15) qui sont enroulés par une bande flexible, une bande à maillons, une chaîne à maillons ou une structure à chaîne (23), en particulier comme pour une bande de transport afin de toucher le profilé (14) avec une zone de contact plate qui se déplace avec le profilé (14) et répartit la pression de retenue sur le profilé (14) de la manière la plus plate possible.

10. Installation de profilage selon la revendication 9,
dans laquelle au moins une partie de l'ensemble d'assemblage (22) plat peut être déplacée de manière motorisée, et dans laquelle une commande est en liaison active avec l'ensemble d'assemblage (22) plat et le transducteur afin de réguler au moins partiellement les pressions de serrage exercées sur le profilé (14) dans la zone d'assemblage (8) à l'aide des forces détectées par déplacement au moins d'une partie de l'ensemble d'assemblage (22) plat.

11. Installation de profilage selon l'une quelconque des revendications 9 ou 10,
dans laquelle le profilé (14) passe après le point d'assemblage (10) par une zone de stabilisation (24) à l'intérieur de la zone d'assemblage afin de stabiliser le cordon de liaison par refroidissement et/ou durcissement,
dans laquelle au moins une partie de l'ensemble d'assemblage (22) plat sert à la stabilisation du profilé (14) dans la zone de stabilisation (24),
et dans laquelle des forces sont de plus détectées, lesquelles sont exercées sur le profilé (14) par au moins une partie de l'ensemble d'assemblage (22) plat dans la zone de stabilisation (24).
